# EUROPEAN PATENT APPLICATION

(11) **EP 4 741 204 A1**
(43) Date of publication of application: **13.05.2026**
(21) Application number: 25210808.9
(22) Date of filing: 23.10.2025
(51) Int. Cl.: B60K 35/22

(54) **DISPLAY WITH INTEGRATED USER MONITORING SYSTEM**

(30) Priority: 11.11.2024 GB 202416560
(71) Applicant: Design LED Products Limited, Livingston, West Lothian EH54 7GA (GB)
(72) Inventor: Gourlay, James, Dumbarton, G82 2HQ (GB); Peden, Derek, Livingston, EH54 7GA (GB); Jankauskas, Marius, Livingston, EH54 7GA (GB); Abaci, Berkan, 75012 Paris (FR); Le Fouler, Yves, 75012 Paris (FR); El Yahyaoui, Sara, 75012 Paris (FR); Dembrey, Charlie, Livingston, EH54 7GA (GB); Robinet, Stéphane, 75012 Paris (FR)
(74) Representative: Lincoln IP

(57) **Abstract**

A display system with an embedded user monitoring system is disclosed herein. The display system is suitable for use with a vehicle. The display comprises a backlighting tile with one or more apertures. The display system further comprises one or more optical sensors and or one or more infrared LEDs. The infrared LEDs are located within the one or more apertures. The display system advantageously is more aesthetically pleasing than systems known in the art and provides improved operation of the user monitoring system functionality.

## Description

The present invention relates to the field of display systems. In particular, the present invention relates to a display system with an integrated user monitoring system. The display system is suitable for, although not necessarily exclusively, the interior and or exterior of a vehicle, for example, as a display system integrated in the instrumental panel of a vehicle, or as a display system integrated in the outside of a B pilar of a vehicle.

### Background to the Invention

A user monitoring system known in the art, for example an interior monitoring system, is a safety system for a vehicle which monitors a driver and occupants, specifically driver characteristics such as distraction, drowsiness, alertness and or tiredness. It can be used also for identifying the identity of user. Such systems known in the art comprise at least an infrared LED and an optical sensor both located within a housing. Interior monitoring systems are positioned within the interior of a vehicle, for example on a dashboard, steering column or interior rear-view mirror. The infrared LED emits infrared radiation (typically with a wavelength of 940nm) towards the driver and or occupants, which is reflected off for example the driver and or occupants' faces and reflected infrared radiation is collected by the optical sensor thereby resulting in an image of the driver and or occupants. If the interior monitoring system detects, for example, the driver is not paying attention to the road, the interior monitoring system provides an output, such as illuminating warning lights or even actively braking the vehicle.

User monitoring systems known in the art are located within dedicated housing which disadvantageously clutter the interior of a vehicle and negatively impact the aesthetics of the vehicle. Furthermore, as the components of user monitoring systems known in the art are constrained within the dedicated housing, they are relatively close together which is not desirable for optimal thermal performance of such systems. These systems also disadvantageously comprise a relatively poor signal-to-noise ratio and so have limited accuracy. Furthermore, such systems can be prone to disturbance due to a high amount of background infrared radiation emitted by infrared LED light source.

There is generally a need for an apparatus to address the problems identified above.

### Summary of Invention

It is an object of an aspect of the present invention to provide an apparatus that obviates or mitigates one or more drawbacks or disadvantages of the prior art.

Further aims and objects of the invention will become apparent from reading the following description.

According to a first aspect of the present invention there is provided a display system, suitable for a vehicle, the display system comprising:
a backlighting tile comprising one or more apertures;
one or more optical sensors; and
one or more infrared LEDs,
wherein the one or more infrared LEDs are located within the one or more apertures.

Most preferably the one or more optical sensors are also located within the one or more apertures. The one or more optical sensors may comprise one or more infrared sensors and or one or more visible sensors.

Optionally, the one or more infrared LEDs and the one or more optical sensors may be located within the same one or more apertures.

It is advantageous for the one or more infrared LEDs and or one or more optical sensors to be located in the one or more apertures in the backlighting tile as this results in a relatively thinner display system. Furthermore, a thinner display system is easier to integrate into a support, for example, into the interior or the exterior of a vehicle. Also, a user monitoring system can be integrated in a display system as presented in this invention more easily while keeping unnoticed by a user.

Most preferably, the display system comprises two or more infrared LEDs. Preferably, the two or more LEDs are located within one or more apertures. Most preferably, the two or more LEDs are located within two or more apertures.

It is advantageous for the display system to comprise two or more infrared LEDs, specifically a distributed array of two or more infrared LEDs, as this results in a wider field of illumination and a wider field of view. This increases the signal-to-noise ratio, and thereby the quality of the resulting detected image. The infrared LEDs can be operated at lower power resulting in greater longevity and reduced power consumption.

Preferably, the one or more apertures comprises one or more sensor apertures and or one or more LED apertures.

Preferably, the one or more optical sensors are located within the one or more sensor apertures.

Preferably, the one or more infrared LEDs are located within the one or more LED apertures.

Preferably, each of the one or more LED apertures comprises one of the one or more infrared LEDs.

Preferably, the display system further comprises a decorative layer. The backlighting tile is configured to backlight the decorative layer.

Preferably, the decorative layer may comprise one or more layers translucent to visible light. The decorative layer may comprise a smoke print layer.

Preferably, the display system further comprises a cover layer. The decorative layer is located between the cover layer and the backlighting tile.

Preferably, the display system further comprises one or more infrared covers. Each infrared cover may be positioned between the cover layer and the one or more infrared LEDs.

Preferably, the one or more infrared covers comprises one or more sensor infrared covers and or one or more LED infrared covers. The one or more sensor infrared covers are positioned between the cover layer and the one or more optical sensors. The one or more LED infrared covers are positioned between the cover layer and the one or more infrared LEDs.

Optionally, the display system may further comprise a mask print layer and or a diffuser layer. The mask print layer and or the diffuser layer may be located between the decorative layer and the backlighting tile.

Optionally, the one or more infrared covers maybe recessed into the diffuser layer.

Optionally, the display system may further comprise a reflector layer. The reflector layer may be located on the opposing side of the backlighting tile relative to the location of the decorative layer.

Optionally, the display system may further comprise one or more optical lenses. The one or more optical lenses are configured to focus radiation upon the one or more optical sensors. The one or more optical lenses may be configured to focus infrared radiation on the one or more infrared sensors and or visible radiation on the one or more visible sensors.

Optionally, the backlighting tile may comprise an RGB LED light tile. In an embodiment, the backlighting tile may comprise a lightguide and one or more RGB LEDs. The one or more RGB LEDs may be side mounted to the lightguide or encapsulated in the lightguide.

Optionally, the one or more apertures may extend between opposing surfaces of the backlighting tile.

Optionally, the one or more apertures within the backlighting tile may extend into one or more additional layers of the display system. The one or more apertures within the backlighting tile may extend into the reflector layer and or the diffuser layer.

Preferably, the display system is located within the interior of the vehicle. Advantageously, the user monitoring system of the display system can monitor the occupants of the vehicle.

Alternatively, the display system may be located external to the vehicle. Advantageously, the display system, and specifically the user monitoring system being external to the vehicle, may facilitate extending human machine interface. For example, externally locating the display system may facilitates: customisation of the vehicle interior or exterior prior to opening vehicle doors; and or activating the profile of driver seat personalisation; and or in opening both rear doors and trunk (also termed the car boot) may indicate the presence of at least one adult with a small child and pram.

### Brief Description of Drawings

There will now be described, by way of example only, various embodiments of the invention with reference to the drawings, of which:
Figure 1 presents an expanded perspective view of a display system in accordance with an embodiment of the present invention;
Figure 2 presents a cross-sectional schematic view of the display system of Figure 1;
Figure 3 presents a plan view of an alternative embodiment of the display system of Figure 1 in operation depicting (A) emitted infrared radiation from one infrared LED and (B) the resulting reflected infrared radiation; and
Figure 4 presents a plan view of the display system of Figure 1 in operation depicting (A) emitted infrared radiation from three infrared LEDs and (B) the resulting reflected infrared radiation.

In the description which follows, like parts are marked throughout the specification and drawings with the same reference numerals. The drawings are not necessarily to scale and the proportions of certain parts have been exaggerated to better illustrate details and features of embodiments of the invention.

### Detailed Description of the Preferred Embodiments

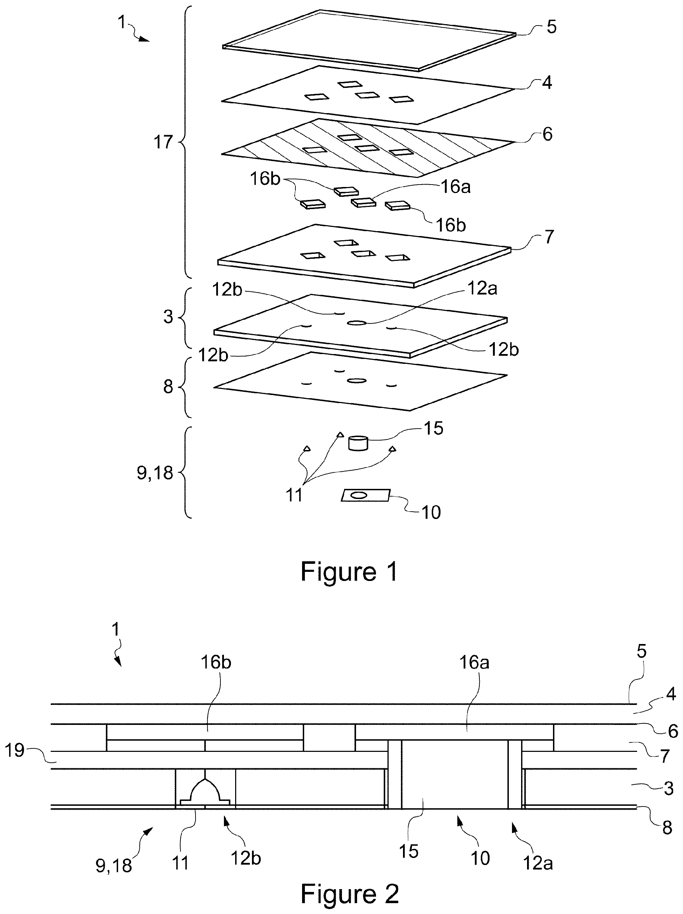

Embodiments of the present invention will now be described with reference to Figures 1 to 4.

Figures 1 and 2 depict a display system 1 suitable for a vehicle. Particularly, the display system 1 is suitable for use as trim within the interior of a vehicle positioned on a dashboard near a driver 2. Alternatively, or additionally, the display system 1 may be positioned near other occupants of the vehicle or even on the exterior of the vehicle. As can be seen, the display system 1 comprises various layers as will now be described.

The display system 1 comprises a backlighting tile 3. The backlighting tile 3 may take the form of a RGB LED light tile. Alternatively, backlighting tile 3 may take the form of a lightguide with a plurality of side mounted RGB LEDs or an array of RGB LEDs distributed across the backlighting tile 3. It will be appreciated that the backlighting tile 3 may take further alternative forms known in the art.

The display system 1 further comprises a decorative layer which takes the form of a smoke print layer 4. The backlighting tile 3 is configured to backlight the smoke print layer 4. It will be appreciated that the decorative layer could take alternative forms such as a display, Thin Film Transistor (TFT) and or Organic Light-Emitting Diode (OLED).

The display system 1 further comprises a cover layer 5. The smoke print layer 4 is located between the cover layer 5 and the backlighting tile 3. The cover layer 5 is an outermost layer of the display system 1 and, in use within a vehicle, the cover layer 5 is exposed to the interior of the vehicle. A purpose of the cover layer 5 is to protect the underlying layers within the display system 1 from the surrounding environment. As such, the cover layer 5 takes the form of a glass material for properties comprising high strength, high scratch resistance, desirable thermal performance and high chemical resistance as well as being transparent to visible light and infrared radiation. It will be appreciated that the cover layer 5 may comprise alternative materials with equivalent properties to glass.

The display system 1 further comprises a mask print layer 6 and a diffuser layer 7 both of which are located between the smoke print layer 4 and the backlighting tile 3. The diffuser layer 7 scatters visible light from the backlighting tile 3 such that, in use, the smoke print layer 4 is more uniformly illuminated with visible light. The mask print layer 6 protects and obscures from view the underlaying layers and or components.

The display system 1 further comprises a reflective layer 8, located on an opposing side of the backlighting tile 3 relative to the location of the smoke print layer 4. The reflective layer 8 reflects visible light originating from the backlighting tile 3 towards the smoke print layer 4. The reflective layer 8 reduces the loss of visible light.

A key feature of the present invention is that the display system 1 comprises an integrated user monitoring system 9. The display system 1 comprises an optical sensor in the form of an infrared sensor 10 and three infrared LEDs 11. It will be appreciated that the optical sensor may comprise infrared and or visible light sensors.

The backlighting tile 3 comprises four apertures 12. The infrared sensor 10 and the infrared LEDs 11 are each located within one of the four apertures 12 as can be seen in Figures 1 and 2.

In operation, the infrared LEDs 11 emit infrared radiation 13 which passes through the layers of the display system 1, exiting the cover layer 5 and into the surrounding environment, such as an interior of a vehicle. The infrared radiation 13 bounces off surfaces within the surrounding environment, such as a driver 2, and reflected infrared radiation 14 passes back through the display system 1 and is detected by the infrared sensor 10.

The display system 1 depicted in Figures 1 and 2 further comprises an optical lens 15 located upon the infrared sensor 10. The optical lens 15 is configured to capture and or focus reflected infrared radiation 14 upon the infrared sensor 10. The combination of an infrared sensor and optical lens is termed and infrared camera.

The four apertures 12 extend between opposing surfaces (alternatively termed opposite sides) of the backlighting tile 3. In other words, the four apertures extend through the entire thickness from a "top" surface to a "bottom" surface of the backlighting tile. Furthermore, it can be seen that the apertures 12 extend into other layers of the display system 1, namely the reflective layer 8, the diffuser layer 7, the mask print layer 6 and the smoke print layer 4.

With reference to Figure 1, the four apertures 12 comprise one sensor aperture 12a and three LED apertures 12b. The infrared sensor 10 is located within the sensor aperture 12a. Each of the three infrared LEDs 11 are located within an LED aperture 12b.

The display system 1 further comprises four infrared covers 16. The four infrared covers 16 are located, specifically recessed, within the diffuser layer 7 and aligned with the apertures 12. In other words, the four infrared covers 16 are located over and cover the infrared sensor 10, the three infrared LEDs 11 and the optical lens 15.

Specifically, the four infrared covers 16 comprise one sensor infrared cover 16a and three LED infrared covers 16b. The sensor infrared cover 16a is positioned between the cover layer 5 and the infrared sensor 10. Each of the three LED infrared covers 16b are positioned between the cover layer 5 and one of the three infrared LEDs 11.

The infrared covers 16 are configured to be transparent to infrared radiation such that the infrared radiation 13 emitted from the infrared LEDs and reflected infrared radiation 14 can pass through the infrared covers 16 without scattering. This is important to construct an accurate image of, for example, a driver's face. The infrared covers 16 are configured to scatter visible light, thereby increasing the uniformity of the visible light backlighting functionality of the display system 1. As such, the infrared covers 16 assist in masking that embedded within the display system 1 are the infrared sensor 10, the three infrareds LEDs 11 and the optical lens 15. The infrared covers 16 remove or at least minimise any defects in the visible light backlighting functionality of the display system 1. The diffuser layer 7 does not extend across the apertures 12 as this layer may scatter infrared radiation as well as visible light.

With particular reference to Figure 1, the layers and components of the display system 1 may be grouped as follows. The combination of the cover layer 5, smoke print layer 4, mask print layer 6, infrared covers 16 and diffuser layer 7 is termed the optical stack 17. The combination of the infrared sensor 10, the three infrared LEDs 11 and the optical lens 15 is termed the infrared components 18. Furthermore, with particular reference to Figure 2, it can be seen that the display system 1 comprises an air gap 19 between the layers.

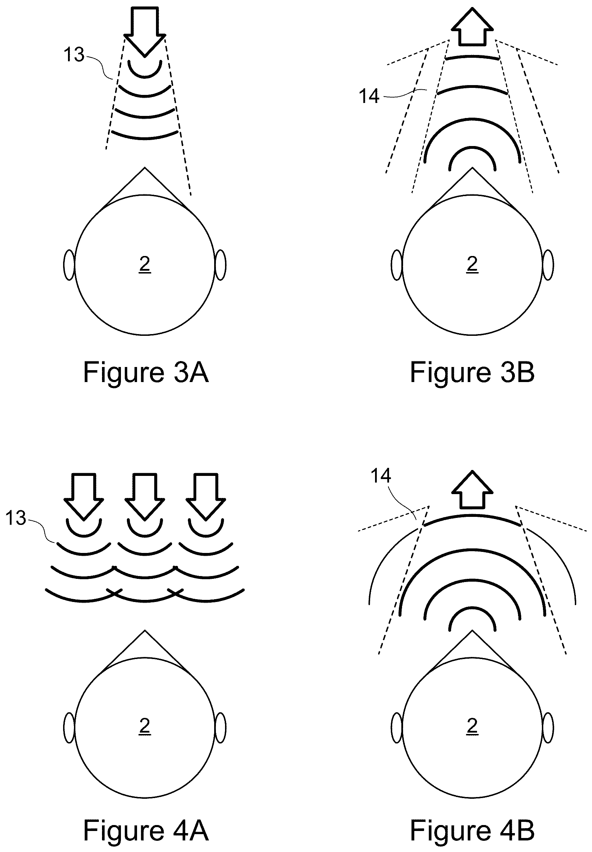

It will be appreciated that the embedded user monitoring system 9 of the display system 1 can operate one infrared LED 11. However, it is advantageous to have an array of infrared LEDs 11, such as three infrared LEDs 11 as now discussed in the context of Figures 3 and 4.

Figures 3 and 4 both depict a plan view of a driver 2 with (A) infrared radiation 13 emitted from the display system 1 towards the driver 2 and (B) reflected infrared radiation 14 reflected off the driver 2 back towards the display system 1.

Figure 3 depicts the emitted and reflected infrared radiation 13, 14 from a display system 1 comprising one infrared LED 11. As can be seen from Figure 3A there is a relatively narrow field of illumination (FOI) upon the driver 2 and the resulting image field of view (FOV) depicted in Figure 4 is also relatively narrow. In contrast, Figure 4 depicts the emitted and reflected infrared radiation 13, 14 from a display system 1 comprising three infrared LEDs 11. Figures 4A depicts a combined, distributed, larger FOI upon the driver 2. Figure 4B depicts the resulting larger image FOV. As such, it is advantageous for the display system 1 to comprise multiple infrared LEDs 11 as this increases the signal-to-noise ratio, and thereby the quality of the resulting image detected by the infrared sensor 10.

It will be appreciated that the display system 1 may comprise any number of infrared sensors 10, any number of infrared LEDs 11 and any number of apertures 12 in which the infrared sensors 10 and or infrared LEDs 11 are located.

Furthermore, it will be appreciated the distribution the infrared sensors 10 and or the infrared LEDs 11 within the apertures 12 may not be one infrared sensor 10 or one infrared LED 11 per aperture 12 as depicted in Figures 1 and 2. There may be multiple infrared sensors 10 and or infrared LEDs 11 within an aperture 12 or even none. The apertures 12 have been subcategorised as sensor apertures 12a or LED apertures 12b to aid the description of Figures 1 and 2 but this terminology does not limit these apertures to exclusively comprising an infrared sensor 10 or infrared LED 12b.

It will also be appreciated that the dimensions of the apertures 12 may vary. For example, as can be seen in Figure 2, the sensor aperture 12a is large than the LED aperture 12b so as accommodate the infrared sensor 10 which is larger than the infrared LEDs 11. Furthermore, the cross-sectional size and or shape of the aperture may change.

It will be appreciated that in alternative embodiments the display system 1 may optionally comprise additional layers and or structures to that described herein. These additional layers and or structures may be to, for example, optimise the thermal performance of the display system 1 or enhances the aesthetics of the display system 1.

It will be appreciated that the integrated user monitoring system 9 of the display system 1 may be operated such that the infrared LEDs 11 are only illuminated when there is minimal visible radiation. For example, during the daytime, there is no need to use the infrared LEDs 11 as the visible sensors will capture reflected visible radiation.

The display system 1 disclosed herein advantageously provides an improved user monitoring system 9, particularly with improved eye tracking and an improved signal to noise ratio.

A key advantage associated with the one infrared LEDs and infrared sensors being located within apertures is that the display system being relatively thin.

In an embodiment of the present invention that comprises multiple infrared LEDs 11, this is advantageous as this increases the signal-to-noise ratio, and thereby the quality, of the resulting image detected by the infrared sensor 10. Furthermore, multiple infrared LEDs 11 are advantageous in the context of sun immunity, namely the disturbance of the user monitoring system 9 due to a high amount of background infrared radiation, for example from sun light. In addition, for the same infrared irradiance of the driver 2, each infrared LED 11 of a display system 1 comprising multiple infrared LEDs 11 can be operated at a relatively reduced electrical load thereby increasing the lifetime of the infrared LEDs 11. This results in power savings and so reduced CO₂ emissions.

Incorporating the user monitoring system 9, specifically the infrared components 18, within a display system 1 advantageously provides improved thermal performance relative to systems known in the art. Instead of the infrared components 18 constrained within a dedicated housing and in close proximity, the infrared components 18 can be spaced further apart and distributed across the display system 1. A key advantageous feature is that the infrared sensor 10 is integrated such that it is not negatively influenced by the light or heat from the infrared LEDs 11 or visible light from the surrounding environment.

More generally, embedding the user monitoring system 9 within a display system 1 is more aesthetically pleasing. This arrangement avoids the need for an aesthetically cumbersome dedicated housing. The infrared components 18 and associated electrical wiring are concealed within the display system 1.

The present invention relates to the integration of array of infrared LEDs in a segmented low-resolution LED display, with the LED circuit enabling electrical and thermal integration and display segmentation providing optical isolation to the infrared camera. For the same infrared irradiance of the driver, each infrared LED in the array operates a lower current, with resulting power and CO₂ savings, and reducing operational load on each infrared LED.

A display system with an embedded user monitoring system is disclosed herein. The display system is suitable for use with a vehicle. The display comprises a backlighting tile with one or more apertures. The display system further comprises one or more optical sensors and or one or more infrared LEDs. The infrared LEDs are located within the one or more apertures. The display system advantageously is more aesthetically pleasing than systems known in the art and provides improved operation of the user monitoring system functionality.

Throughout the specification, unless the context demands otherwise, the terms "comprise" or "include", or variations such as "comprises" or "comprising", "includes" or "including" will be understood to imply the inclusion of a stated integer or group of integers, but not the exclusion of any other integer or group of integers. Furthermore, unless the context clearly demands otherwise, the term "or" will be interpreted as being inclusive not exclusive.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. A display system, suitable for a vehicle, the display system comprising:
a backlighting tile comprising one or more apertures;
one or more optical sensors; and
one or more infrared LEDs,
wherein the one or more infrared LEDs are located within the one or more apertures.

2. The display system as claimed in claim 1 wherein the one or more optical sensors are also located within the one or more apertures.

3. The display system as claimed in any of the preceding claims wherein the display further comprises a decorative layer and wherein the backlighting tile is configured to backlight the decorative layer.

4. The display system as claimed in claim 3 wherein the display system further comprises a cover layer and wherein the decorative layer is located between the cover layer and the backlighting tile.

5. The display system as claimed in claim 4 wherein the display further comprises one or more infrared covers, each infrared cover being positioned between the cover layer and the one or more infrared LEDs.

6. The display system as claimed in any of the preceding claims wherein the display system further comprises a mask print layer and or a diffuser layer and or a reflector layer.

7. The display system as claimed in claim 6 wherein the reflector layer is located on the opposing side of the backlighting tile relative to the location of the decorative layer.

8. The display system as claimed in any of the preceding claims wherein the display system further comprises one or more optical lenses and wherein the one or more optical lenses are configured to focus radiation upon the one or more optical sensors.

9. The display system as claimed in any of the preceding claims wherein the one or more apertures extend between opposing surfaces of the backlighting tile.

10. The display system as claimed in claim 9 wherein the apertures additionally extend into one or more additional layers of the display system.
